# EUROPEAN PATENT APPLICATION

(11) **EP 4 582 504 A1**
(43) Date of publication of application: **09.07.2025**
(21) Application number: 23860194.2
(22) Date of filing: 25.08.2023
(51) Int. Cl.: C09J 7/50, C09D 5/00, C09J 7/25, C09J 7/38, C09J 133/04

(54) **ADHESIVE FILM, HEAT MOLDED BODY AND METHOD FOR PRODUCING ADHESIVE FILM**

(30) Priority: 30.08.2022 JP 2022136607
(71) Applicant: MITSUBISHI GAS CHEMICAL COMPANY, INC., Chiyoda-ku Tokyo 100-8324 (JP)
(72) Inventor: KAKEYA, Fumiaki, Tokyo 125-8601 (JP)
(74) Representative: Hoffmann Eitle
(86) International application number: PCT/JP2023/030649
(87) International publication number: WO 2024/048432

(57) **Abstract**

To provide an adhesive film having high formability, a thermoformed article, and a method for manufacturing the adhesive film. The adhesive film contains a base material film comprising a polycarbonate; a primer layer provided on at least one surface of the base material film; and an adhesive layer provided on the primer layer on the surface opposite to the base material film, wherein the primer layer is formed of a primer layer composition comprising an oligomer diol.

## Description

### Technical Field

The present invention relates to an adhesive film, a thermoformed article, and a method for manufacturing the adhesive film.

Base material films of adhesive films made of polyolefins such as polypropylene and polyethylene have been conventionally known. Polyolefin sheets are however problematic in heat resistance. Meanwhile, for example, polyethylene terephthalate is also conceivable to improve the heat resistance. However, polyethylene terephthalate requires improvement from the viewpoint of moist heat property and formability. Accordingly, it has been examined to use polycarbonates as the base material films of adhesive films.

Patent Literature 1 specifically discloses an adhesive film that is a layered object comprising a base material film comprising a polycarbonate, a primer layer layered on at least one surface of the base material film, and an adhesive layer layered on the primer layer on the surface opposite to the base material film.

### Citation List

### Patent Literature

Patent Literature 1
International Publication No. WO 2020/162395

### Summary of Invention

### Technical Problem

The above-mentioned adhesive film is excellent. If the primer layer is provided between the base material film and the adhesive layer, the adhesive film is useful from the viewpoint of chemical resistance. It has however been found that if the primer layer is provided, the adhesive film may be inferior in formability in some uses. It has been specifically found that if the adhesive film is heat-bent after a heat resistance test or formed with a metal mold having a protrusion, the primer layer may crack.

An object of the present invention is to solve such a problem, and is to provide an adhesive film having high formability, a thermoformed article, and a method for manufacturing the adhesive film.

### Solution to Problem

The present inventors conducted research to address the above-mentioned problems, and as a result, discovered that the above problems could be solved by blending an oligomer diol into the primer layer.

Specifically, the problems described above are solved by the following means.
<1> An adhesive film, comprising:
   a base material film comprising a polycarbonate;
   a primer layer provided on at least one surface of the base material film; and
   an adhesive layer provided on the primer layer on a surface opposite to the base material film,
   wherein the primer layer is formed of a primer layer composition comprising an oligomer diol.
<2> The adhesive film according to <1>, wherein the oligomer diol comprises a polycarbonate diol.
<3> The adhesive film according to <1> or <2>, wherein the primer layer comprises a polyfunctional urethane (meth)acrylate.
<4> The adhesive film according to any one of <1> to <3>, wherein the primer layer comprises particulates having an average particle size of 0.1 to 10 µm.
<5> The adhesive film according to <4>, wherein a content of the particulates is 0.1 to 5 parts by mass based on 100 parts by mass of the primer layer.
<6> The adhesive film according to <4> or <5>, wherein, in the primer layer, a ratio of an average thickness of portions at which the particulates do not form projections on a surface of the primer layer, T², to an average thickness of portions at which the particulates form the projections on the surface of the primer layer, T¹, (T²/T¹) is 0.3 to 0.8.
<7> The adhesive film according to any one of <1> to <6>, wherein the oligomer diol has a number average molecular weight (Mn) of 500 to 5,000.
<8> The adhesive film according to any one of <1> to <7>, wherein the oligomer diol comprises a chain polycarbonate diol.
<9> The adhesive film according to <8>, wherein the chain polycarbonate diol comprises a chain diol unit having 3 to 10 carbon atoms.
<10> The adhesive film according to <8>, wherein the chain polycarbonate diol comprises a 1,5-pentanediol unit and/or a 1,6-hexanediol unit.
<11> The adhesive film according to any one of <1> to <10>, wherein the adhesive layer comprises an acrylic adhesive and/or a urethane adhesive.
<12> The adhesive film according to any one of <1> to <11>, wherein the primer layer has a thickness of 0.1 to 5 µm.
<13> The adhesive film according to any one of <1> to <12>, wherein haze of the adhesive film measured in accordance with JIS K7136 is 3% or less.
<14> The adhesive film according to any one of <1> to <13>, wherein the base material film has a polycarbonate layer and an acrylic resin layer.
<15> The adhesive film according to any one of <1> to <14>, wherein the base material film comprises the polycarbonate having a glass transition temperature of 100 to 140°C, the glass transition temperature being measured in accordance with differential scanning calorimetry.
<16> The adhesive film according to any one of <1> to <15>, wherein the base material film has a thickness of 30 to 1000 µm.
<17> The adhesive film according to <1>,
   wherein the oligomer diol comprises a polycarbonate diol,
   the primer layer comprises a polyfunctional urethane (meth)acrylate,
   the oligomer diol has a number average molecular weight (Mn) of 500 to 5,000,
   the oligomer diol comprises a chain polycarbonate diol,
   the chain polycarbonate diol comprises a 1,5-pentanediol unit and/or a 1,6-hexanediol unit,
   the adhesive layer comprises an acrylic adhesive and/or a urethane adhesive, and
   the base material film comprises the polycarbonate having a glass transition temperature of 100 to 140°C, the glass transition temperature being measured in accordance with differential scanning calorimetry.
<18> A thermoformed article of the adhesive film according to any one of <1> to <17>.
<19> A method for manufacturing the adhesive film according to any one of <1> to <17>, comprising:
   a primer layer formation step of applying a primer layer composition comprising an oligomer diol to a surface of a base material film comprising a polycarbonate to form a primer layer and
   an adhesive layer formation step of applying an adhesive to the primer layer on the surface opposite to the base material film to form an adhesive layer.

### Advantageous Effects of Invention

The present invention has enables providing an adhesive film having high formability, a thermoformed article, and a method for manufacturing the adhesive film.

### Brief Description of Drawings

[Figure 1] Figure 1 is a cross-sectional schematic view showing the layer structure of an adhesive film of the present invention in the thickness direction.
[Figure 2] Figure 2 is a schematic view for describing the average thickness of portions at which particulates form projections on the surface of the primer layer, T¹, and the average thickness of portions the particulates do not form the projections on the surface of the primer layer, T².

### Description of Embodiments

Hereinafter, forms for implementing the present invention (hereinafter merely referred to as the "present embodiments") will be described in detail. The following present embodiments are illustrations for describing the present invention, and the present invention is not limited exclusively to the present embodiments.

The term "to" as used herein means that the numerical values described above and below the term "to" are included as the lower and upper limits.

Various physical property values and characteristic values as used herein are defined as physical property values and characteristic values at 23°C unless otherwise specified.

The term "(meth)acrylic" as used herein means both or either of the terms "acrylic" and "methacrylic", and the term "(meth)acryloyl" means both or either of the terms "acryloyl" and "methacryloyl".

The "film" as used herein refers to an almost flat formed article having the thickness smaller than the length and the width, and is a concept including sheets. The "film" used herein may be a monolayer or a multilayer.

If a measuring method described by the standard shown herein varies depending on the year, the measuring method shall be based on the standard as of January 1, 2022 unless otherwise specified.

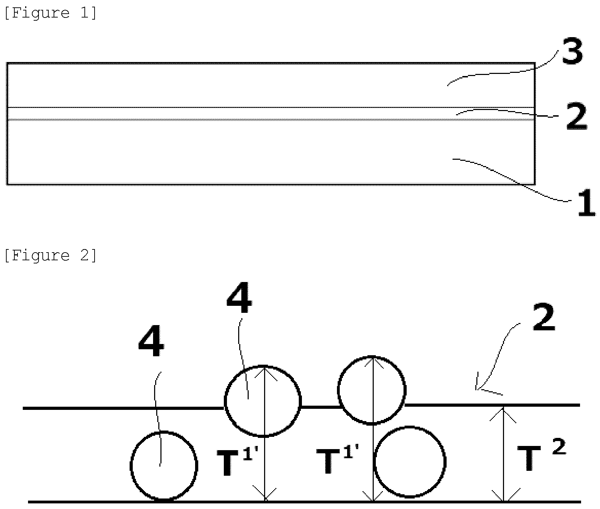

Figures 1 and 2 are schematic views, and the scale ratio and others may not correspond with the actual ones.

An adhesive film of the present embodiment comprises a base material film comprising a polycarbonate, a primer layer provided on at least one surface of the base material film, and an adhesive layer provided on the primer layer on the surface opposite to the base material film, and is characterized in that the primer layer is formed of a primer layer composition comprising an oligomer diol. The adoption of such a structure enables obtaining an adhesive film having high formability. This is because the adhesive film of the present embodiment comprises the base material comprising polycarbonate, the primer layer, and the adhesive layer, and further comprises, for example, an acrylic resin layer as needed. It has been found that if such a film is heat-bent or formed with a metal mold having a protrusion, the primer layer may crack. It has been conjectured that this is because the primer layer cannot follow the bending processing fully. It is conjectured that in the present embodiment, blending the oligomer diol into the primer layer has enabled improving the elongation of the primer layer and suppressing cracking in the primer layer during the heat bending processing effectively.

Furthermore, if the adhesive film is subjected to a heat resistance test or a moist heat resistance test, the adhesive of the adhesive film may be moved (transferred) to an adherent. In the present embodiment, a polycarbonate diol can be used as the oligomer diol for the primer layer to suppress the transfer effectively. It is conjectured that this is because the interaction between the base material film containing the polycarbonate and the polycarbonate diol has enhanced the adhesion between the primer layer and the base material film.

Hereinafter, details of the present embodiments will be described.

For example, as shown in Figure 1, the adhesive film of the present embodiment comprises a base material film 1 comprising a polycarbonate, a primer layer 2 provided on at least one surface of the base material film 1, and an adhesive layer 3 provided on the primer layer on the surface opposite 2 to the base material film 1.

As shown in Figure 1, the base material film 1 comprising polycarbonate is in contact with the primer layer 2, which is in contact with the adhesive layer 3. Another member on which such an adhesive film is pasted together through the adhesive layer 3 is usually used.

In the present embodiment, the base material film 1 may comprise two or more layers, the primer layer 2 may comprise two or more layers, or the adhesive layer 3 may comprise two or more layers. Examples of the adhesive film comprising the base material film 1 comprising two or more layers include an adhesive film comprising the base material film 1 having a polycarbonate layer and an acrylic resin layer. In this case, the polycarbonate layer is preferably in contact with the primer layer 2. An adhesive film having a structure of base material film 1/ primer layer 2/ primer layer 2/ adhesive layer 3 or an adhesive film having a structure of base material film 1/ primer layer 2/ adhesive layer 3/ adhesive layer 3 are also exemplified.

In the present embodiment, the adhesive film may have the primer layers 2 and adhesive layers on both sides of the base material film 1 comprising polycarbonate. For example, an adhesive film comprising adhesive layer 3/ primer layer 2/ base material film 1/ primer layer 2/ adhesive layer 3 is exemplified. In this case, the adhesive layer 3 and the primer layer 2 on the one side may be the same as or different from the adhesive layer 3 and the primer layer 2 on the other side.

The adhesive film of the present embodiment may comprise the base material film 1 comprising polycarbonate, the primer layer 2, and another layer other than the adhesive layer 3. As the other layers, a hard coat layer and a functional film such as low reflection are specifically exemplified.

Hereinafter, details of the layers in the present embodiment will be described.

### <Base material film comprising polycarbonate>

The base material film of the present embodiment comprises a polycarbonate.

As long as the polycarbonate contained in the base material film comprises a -[O-R-OC(=O)]- unit, containing carbonate ester bonds, wherein R is a hydrocarbon group specifically containing an aliphatic group, an aromatic group, or both an aliphatic group and an aromatic group and further having a linear or branched structure in the main chains of the molecules thereof, the polycarbonate may be of any type, and is preferably an aromatic polycarbonate, more preferably a polycarbonate having a bisphenol backbone, further preferably a polycarbonate having a constituent unit derived from at least one of bisphenol A, bisphenol AP, and bisphenol C, more preferably a polycarbonate having a constituent unit derived from at least one of bisphenol A and bisphenol AP, and further preferably a polycarbonate having a constituent unit derived from bisphenol A. The use of such a polycarbonate enables achieving higher heat resistance and toughness. It is preferable that, in the polycarbonate having the bisphenol backbone, 90% by mole or more of all the constituent units be constituent units having a bisphenol backbone.

The polycarbonate for the base material film preferably contains a polycarbonate having a terminal structure represented by formula (1). If the polycarbonate has such a terminal structure of the polycarbonate, the glass transition temperature is reduced while the toughness of the material is maintained. Consequently, a sheet with high heat bendability is obtained. The polycarbonate having the terminal structure represented by formula (1) means a polycarbonate wherein at least one of the terminals thereof has a terminal structure represented by formula (1). In the present embodiment, 50% by mole or more of the polycarbonate contained in the base material film preferably has at least one terminal structure represented by formula (1): 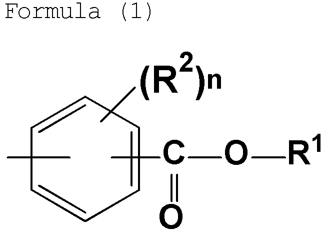 wherein R¹ represents an alkyl group having 8 to 36 carbon atoms or an alkenyl group having 8 to 36 carbon atoms, R² represents a halogen atom, an alkyl group having 1 to 20 carbon atoms, or an aryl group having 6 to 12 carbon atoms, and n is an integer of 0 to 4.

R¹ is preferably an alkyl group or an alkenyl group having 12 or more carbon atoms and more preferably an alkyl group or an alkenyl group having 14 or more carbon atoms. R¹ is preferably an alkyl group or an alkenyl group having 22 or less carbon atoms and more preferably an alkyl group or an alkenyl group having 18 or less carbon atoms. R¹ is preferably an alkyl group.

R² is preferably a fluorine atom, a chlorine atom, a methyl group, an ethyl group, or a phenyl group, and is preferably a fluorine atom, a chlorine atom, or a methyl group.

n is preferably an integer of 0 to 2, more preferably 0 or 1, and further preferably 0.

An end terminator can be used for adding the terminal structure represented by formula (1) to the polycarbonate. The description in paragraphs 0022 to 0030 of Japanese Patent Laid-Open No. 2019-2023 can be referred to for details of these. The contents thereof are incorporated herein.

The polycarbonate has a viscosity average molecular weight (Mv) of preferably 10,000 or more, more preferably 12,000 or more, further preferably 15,000 or more, and still more preferably 20,000 or more. If the viscosity average molecular weight is equal to or more than the lower limit, the durability of the base material film tends to be further improved. The upper limit of the viscosity average molecular weight (Mv) of the polycarbonate is preferably 45,000 or less, more preferably 40,000 or less, and further preferably 34,000 or less. If the viscosity average molecular weight is equal to or less than the upper limit, the formability of the base material film tends to be further improved.

The viscosity average molecular weight (Mv) means a value calculated as follows. The intrinsic viscosity [η] (unit: dL/g) at 25°C is determined with an Ubbelohde viscometer using methylene chloride as a solvent, and the above-mentioned value is calculated therefrom in accordance with Schnell's viscosity equation, namely η = 1.23 × 10⁻⁴ × Mv^{0.83}.

If two or more polycarbonates are used, the viscosity average molecular weight is defined as the viscosity average molecular weight of the mixture (hereinafter, the various physical properties are conceived in the same way as the viscosity average molecular weight).

The glass transition temperature (Tg) of the polycarbonate for the present embodiment measured in accordance with differential scanning calorimetry is preferably 154°C or less, more preferably 152°C or less, further preferably 140°C or less, and still more preferably 135°C or less. If the glass transition temperature is equal to or less than the upper limit, the heat bending formability of the multilayered article tends to be further improved. The glass transition temperature (Tg) of the polycarbonate for the present embodiment is, for example, 100°C or more, and may be furthermore 120°C or more or 125°C or more. Especially if the glass transition temperature (Tg) of the polycarbonate measured by differential scanning calorimetry is adjusted to 100 to 140°C, an adhesive film having high bending processability is obtained.

The glass transition temperature is measured in accordance with the description in Examples, described below. If the polycarbonate is a mixture of two or more polycarbonates, the glass transition temperature is defined as the glass transition temperature of the polycarbonate mixture.

Moreover, as long as the polycarbonate that can be used for the base material film does not depart from the subject matter of the present invention, the description in paragraphs 0042 to 0050 of Japanese Patent Laid-Open No. 2017-213771 and paragraphs 0015 to 0041 of Japanese Patent Laid-Open No. 2018-090677 can be referred to, and the contents thereof are incorporated herein.

The base material film may contain additives. As the additives, at least one selected from the group consisting of a heat stabilizer, an antioxidant, a flame retardant, an auxiliary flame retardant, an ultraviolet absorbent, a mold releasing agent, and a colorant is exemplified. For example, an antistatic agent, a near infrared ray shielding agent, a light-diffusing agent, a fluorescent brightener, an anti-fogging agent, a fluidity improving agent, a plasticizer, a dispersant, and an antimicrobial agent may be further added to the base material film. Examples of the antioxidant include phenol antioxidants, amine antioxidants, phosphorus-containing antioxidants, and thioether antioxidants. In the present invention, phosphorus-containing antioxidants and phenol antioxidants (more preferably hindered phenol antioxidants) are preferable among others. The phosphorus-containing antioxidants are preferable due to an excellent hue of the base material film. The description in paragraphs 0098 to 0106 of Japanese Patent Laid-Open No. 2018-178075 can be referred to for the phosphorus-containing antioxidants, and the contents thereof are incorporated herein.

The total amount of the additives in the base material film is preferably 0 to 10% by mass and more preferably 0 to 5% by mass.

The layer structure in the base material film will then be described.

The base material film may be a monolayer or a multilayer.

If the base material film is a monolayer, the base material film is preferably a polycarbonate monolayer film, and the polycarbonate layer more preferably contains the polycarbonate at 90% by mass or more thereof.

If the base material film is a multilayer, the base material film preferably has a polycarbonate layer and an acrylic resin layer.

The acrylic resin layer preferably contains an acrylic resin such as poly(methyl (meth)acrylate) resin (poly(methyl acrylate) or poly(methyl methacrylate)), and more preferably contains an acrylic resin at 90% by mass or more thereof.

In the present embodiment, the base material film has a thickness (total thickness) of preferably 30 µm or more, more preferably 100 µm or more, further preferably 150 µm or more, still more preferably 200 µm or more, and much more preferably 250 µm or more. If the thickness is equal to or more than the lower limit, namely 30 µm, the paste processability tends to be further improved. The base material film has a thickness (total thickness) of preferably 1000 µm or less, more preferably 800 µm or less, further preferably 700 µm or less, still more preferably 600 µm or less, and much more preferably 500 µm or less. If the thickness is equal to or less than the upper limit, namely 300 µm, the formability tends to be further improved.

If the base material film has the polycarbonate layer and the acrylic resin layer, the thickness of the polycarbonate layer is, but not particularly limited to, for example, 1 µm or more, preferably 30 µm or more, more preferably 35 µm or more, further preferably 40 µm or more, still more preferably 50 µm or more, much more preferably 100 µm or more, and by far more preferably 200 µm or more. The thickness of the above-mentioned polycarbonate layer is preferably 900 µm or less and more preferably 800 µm or less, or may be 700 µm or less or 600 µm or less.

If the base material film has the polycarbonate layer and the acrylic resin layer, the thickness of the acrylic resin layer is, for example, 1 µm or more, preferably 10 µm or more, more preferably 20 µm or more, further preferably 50 µm or more, and more preferably 60 µm or more. If the thickness is equal to or more than the lower limit, the hardness tends to be improved. The upper limit of the thickness of the acrylic resin layer is, but not particularly limited to, preferably 500 µm or less, more preferably 300 µm or less, and further preferably 150 µm or less. If the thickness is equal to or less than the upper limit, the formation tends to be further facilitated.

### <Primer layer>

The adhesive film of the present embodiment comprises the primer layer provided on at least one surface of the base material film. The primer layer is formed of a primer layer composition containing an oligomer diol. The primer layer composition is used for forming the primer layer, and may be referred to as a primer paint. An oligomer is a polymer, in which monomers are polymerized to a low degree, and an oligomer having a number average molecular weight of 5,000 or less is preferable.

As the oligomer diol in the present embodiment, polycarbonate diols; polyalkylene glycols such as polypropylene glycol and polytetramethylene glycol; polyester diols; epoxy-modified polyols are exemplified. Polycarbonate diols and polytetramethylene glycol are preferable, and polycarbonate diols are more preferable.

The polycarbonate diol is preferably a chain polycarbonate diol, more preferably contains a chain diol unit having 3 to 10 carbon atoms, and further preferably contains a 1,5-pentanediol unit and/or a 1,6-haxanediol unit. The term "chain" as used here means "linear" or "branched", and means that the term "chain" does not include "cyclic". The chain diol unit having 3 to 10 carbon atoms means a constituent unit comprising one or more chain diol units having 3 to 10 carbon atoms. The use of the chain polycarbonate diol makes the obtained primer layer less rigid, and improves the formability thereof.

The oligomer diol for the present embodiment has a number average molecular weight of preferably 500 or more, more preferably 800 or more, further preferably 1,200 or more, still more preferably 1,500 or more, and much more preferably 1,800 or more. The oligomer diol has a number average molecular weight of preferably 5,000 or less, more preferably 4,000 or less, further preferably 3,500 or less, still more preferably 3,000 or less, and much more preferably 2,500 or less. If the number average molecular weight is in this range, the formability and the coatability of the primer layer are compatible.

The number average molecular weight is measured in accordance with the description in Examples, mentioned below.

The content of the oligomer diol in the primer layer composition for the present embodiment is preferably 10 parts by mass or more, more preferably 20 parts by mass or more, further preferably 30 parts by mass or more, still more preferably 40 parts by mass or more, and much more preferably 50 parts by mass or more based on 100 parts by mass of solid matter (that is components to be the primer layer, and usually means components except the solvent in the primer layer composition). If the content is equal to or more than the lower limit expressed in part by mass, the elongation of the primer layer tends to be increased, and the formability thereof tends to be further improved. The content of the oligomer diol in the primer layer composition for the present embodiment is preferably 90 parts by mass or less, more preferably 85 parts by mass or less, further preferably 80 parts by mass or less, still more preferably 75 parts by mass or less, and much more preferably 70 parts by mass or less based on 100 parts by mass of the solid matter. If the content is equal to or less than the upper limit expressed in part by mass, the chemical resistance can be maintained.

The primer layer composition of the present embodiment may contain only one oligomer diol or two or more oligomer diols. If two or more oligomer diols are contained, the total content is preferably in the above-mentioned range.

The primer layer preferably contains a polyfunctional urethane (meth)acrylate. The primer layer contains the polyfunctional urethane (meth)acrylate at usually 90% by mass or more, preferably 95% by mass or more, and more preferably 98% by mass or more of all the components except particulates. The primer layer may contain the polyfunctional urethane (meth)acrylate at 100% by mass.

The polyfunctional urethane (meth)acrylate is preferably ultraviolet-curable.

The polyfunctional urethane (meth)acrylate is preferably a di-to tetrafunctional urethane (meth)acrylate, more preferably a di- or trifunctional urethane (meth)acrylate, and further preferably a difunctional urethane (meth)acrylate.

If the primer layer contains the polyfunctional urethane (meth)acrylate, the primer layer composition preferably contains a di- or more-functional isocyanate and a (meth)acrylate compound having hydroxy groups besides the oligomer diol. In the case of such a composition, the polyfunctional urethane (meth)acrylate is obtained.

The di- or more-functional isocyanate is preferably a di- to tetrafunctional isocyanate, more preferably a di- or trifunctional isocyanate, and further preferably a difunctional isocyanate.

A polyisocyanate produced by polymerization using the condensation of the di- or more-functional isocyanates or the reaction of the di- or more-functional isocyanate with the diol is also preferably usable.

The isocyanate may be an aliphatic isocyanate or an aromatic isocyanate. The isocyanate is preferably an aliphatic isocyanate. The use of the aliphatic isocyanate enables obtaining an adhesive film having higher formability.

The molecular weight of the isocyanate can be suitably determined depending on the use.

The molecular weight of the isocyanate is preferably 120 or more, more preferably 150 or more, and further preferably 200 or more. The molecular weight is preferably 800 or less and still more preferably 500 or less.

The molecular weight of the polyisocyanate is preferably 500 or more and more preferably 1000 or more. The molecular weight is preferably 30000 or less and more preferably 20000 or less.

The primer layer composition may contain only one isocyanate or two or more isocyanates. If two or more isocyanates are contained, the molecular weight thereof is defined as the sum of the molecular weights of the isocyanates multiplied by the mass fractions thereof.

As the isocyanate, hexamethylene diisocyanate, lysine methyl ester diisocyanate, 2,4,4-trimethylhexamethylene diisocyanate, dimer acid diisocyanate, isophorone diisocyanate (IPDI), methylene bis(cyclohexane-4,1-diyl) bisisocyanate, ω,ω'-diisocyanate dimethylcyclohexane are specifically exemplified.

The content of the isocyanate in the primer layer composition for the present embodiment is preferably 5 parts by mass or more, more preferably 7 parts by mass or more, further preferably 8 parts by mass or more, still more preferably 9 parts by mass or more, and much more preferably 10 parts by mass or more based on 100 parts by mass of the solid matter. If the content is equal to or more than the lower limit expressed in part by mass, the chemical resistance of the primer layer tends to be further improved. The content of the isocyanate in the primer layer composition for the present embodiment is preferably 40 parts by mass or less, more preferably 30 parts by mass or less, further preferably 25 parts by mass or less, still more preferably 20 parts by mass or less, and much more preferably 18 parts by mass or less based on 100 parts by mass of the solid matter. If the content is equal to or less than the upper limit expressed in part by mass, the toughness of the primer layer tends to be further improved.

If the primer layer composition of the present embodiment contains two or more isocyanates, the total amount thereof is preferably the above-mentioned content.

The (meth)acrylate compound having hydroxy groups will then be described.

The (meth)acrylate compound having hydroxy groups is a compound having one or more (meth)acryloyloxy groups and one or more hydroxy groups in each molecule thereof, preferably a compound having one to three (meth)acryloyloxy groups and one to three hydroxy groups in each molecule, and more preferably one (meth)acryloyloxy group and one hydroxy group in each molecule.

The molecular weight of the (meth)acrylate compound having hydroxy groups is preferably 50 or more, more preferably 80 or more, and further preferably 100 or more. If the molecular weight is equal to or more than the lower limit, the formability tends to be further improved. The upper limit of the (meth)acrylate compound having hydroxy groups is preferably 1000 or less, more preferably 900 or less, further preferably 800 or less, still more preferably 700 or less, and much more preferably 650 or less. If the molecular weight is equal to or less than the upper limit, the stickiness tends to be able to be effectively suppressed.

The primer layer composition may contain only one (meth)acrylate compound having hydroxy groups or two or more (meth)acrylate compounds having hydroxy groups. If two or more (meth)acrylate compounds having hydroxy groups are contained, its molecular weight is defined as the sum of the molecular weights of the (meth)acrylate compounds having hydroxy groups multiplied by the mass fractions thereof.

Examples of the (meth)acrylate compound having hydroxy groups include pentaerythritol triacrylate (PETA), dipentaerythritol pentaacrylate (DPPA), hydroxypropyl (meth)acrylate (hydroxypropyl acrylate: HPA), 1-(2-hydroxyethyl)2-[2-[(1-oxo-2-propenyl)oxy]ethyl] 1,2-benzenedicarboxylate, and an adduct of 2-hydroxyethyl acrylate with 4 mol of ε-caprolactone.

The content of the (meth)acrylate compound having hydroxy groups in the primer layer composition for the present embodiment is preferably 5 parts by mass or more, more preferably 10 parts by mass or more, further preferably 12 parts by mass or more, still more preferably 15 parts by mass or more, and much more preferably 18 parts by mass or more based on 100 parts by mass of the solid matter. If the content is equal to or more than the lower limit expressed in part by mass, the chemical resistance of the primer layer tends to be further improved. The content of the (meth)acrylate compound having hydroxy groups in the primer layer composition used in the present embodiment is preferably 60 parts by mass or less, more preferably 50 parts by mass or less, further preferably 45 parts by mass or less, still more preferably 40 parts by mass or less, and much more preferably 35 parts by mass or less based on 100 parts by mass of the solid matter. If the content is equal to or less than the upper limit expressed in part by mass, the thermoformability of the film tends to be further improved.

If the primer layer composition of the present embodiment contains two or more (meth)acrylate compounds having hydroxy groups, the total amount thereof is preferably the above-mentioned content.

For example, epoxy (meth)acrylate, acrylic (meth)acrylate, an antistatic agent, an ultraviolet absorbent (ultraviolet-shielding agent), a near infrared shielding agent, and particulates including silica and metal particulates may be added to the primer layer or the primer layer composition besides the above-mentioned components. The total amount thereof is preferably 10% by mass or less of the solid matter in the primer layer composition.

The primer layer composition may further contain either of a leveling agent and a photopolymerization initiator. The primer layer composition may contain a solvent.

The addition of the leveling agent to the primer layer composition enables imparting orientation to the surface of the coating film in the drying step, uniforming and reducing the surface tension of the coating film, preventing floating or cissing, and improving the wettability to a coated object. As the leveling agent, for example, a silicone surfactant, an acrylic surfactant, and a fluorine-containing surfactant are preferably used.

As mentioned above, the primer layer or the primer layer composition may contain particulates in the present embodiment. If the particulates are contained, the antiblocking properties tends to be further improved.

The particulates may be either organic particulates or inorganic particulates. The particulates are preferably inorganic particulates, more preferably silica or metal particulates, and further preferably silica.

The particulates have an average particle size of preferably 0.1 µm or more, more preferably 0.5 µm or more, further preferably 1.0 µm or more, still more preferably 1.5 µm or more, and much more preferably 2.4 µm or more. If the average particle size is equal to or more than the lower limit, the primer layer is less tack, and the antiblocking effect tends to be further improved. The particulates have an average particle size of preferably 10 µm or less, more preferably 8 µm or less, further preferably 6 µm or less, still more preferably 4 µm or less, and much more preferably 3 µm or less. If the average particle size is equal to or less than the upper limit, the adhesive film to be obtained can be thinly formed.

In the present embodiment, the primary particle sizes of the particulates were measured in a scanning electron microscope (SEM) image of the particulates by SEM observation, and the average value of the primary particle sizes of the 50 particulates was defined as the average particle size.

The content of the particulates is preferably 0.1 parts by mass or more and more preferably 0.3 parts by mass or more based on 100 parts by mass of the primer layer or 100 parts by mass of the solid matter in the primer layer composition. If the content is equal to or more than the lower limit expressed in part by mass, the antiblocking effect tends to be further improved. The content of the particulates is preferably 5 parts by mass or less, more preferably 4 parts by mass or less, further preferably 3 parts by mass or less, still more preferably 2 parts by mass or less, and much more preferably 1 part by mass or less based on 100 parts by mass of the primer layer or 100 parts by mass of the solid matter in the primer layer composition. If the content is equal to or less than the upper limit expressed in part by mass, the effect of reducing the haze tends to be further improved.

The primer layer or the primer layer composition may contain only one type of particulates or two or more types of particulates. If two or more types of particulates are contained, the total amount is preferably in the above-mentioned range.

The description in paragraphs 0012 to 0019 and 0029 to 0030 of Japanese Patent Laid-Open No. 2016-182791 and the description in paragraphs 0051 to 0056 of Japanese Patent Laid-Open No. 2015-147837 can be referred to for the primer layer besides the above, and the contents thereof are incorporated herein.

The thickness of the primer layer is preferably 0.1 µm or more and more preferably 0.5 µm or more. If the thickness is equal to or more than the lower limit, the base material film can be effectively prevented from whitening due to the solvent during the application of the primer layer composition. The thickness of the primer layer is preferably 5 µm or less, more preferably 4 µm or less, further preferably 3 µm or less, and still more preferably 2 µm or less. If the thickness is equal to or less than the upper limit, the primer is less likely to crack during the heat bending processing.

As described in the next paragraph, if the particulates form projections on the surface of the primer layer, the thickness of the primer layer is defined as an average thickness including the heights of projections and defined as the average thickness of thicknesses at ten random points.

In the present embodiment, the ratio of the average thickness of portions at which the particulates do not form projections on the surface of the primer layer T² to the average thickness of portions at which the particulates form the projections on the surface of the primer layer T¹ in the primer layer (T²/T¹) is preferably 0.3 or more. The ratio is preferably 0.8 or less, more preferably 0.7 or less, further preferably 0.6 or less, and still more preferably 0.5 or less.

The average thickness of the portions forming the projections on the surface of the primer layer T¹ and the average thickness of the portions not forming the projections on the surface of the primer layer T² will be described using Figure 2. Figure 2 shows that a primer layer 2 is formed on the surface of a base material film (not shown), and reference numeral 4 denotes particulates contained in the primer layer. As shown in Figure 2, the average thickness of the portions forming the projections on the surface of the primer layer T¹ means the average value of the thicknesses of the portions at which the particulates project from the film surface of the primer layer (heights: T^{1'}). Accordingly, the values of T^{1'} are various depending on the height of the projection, and the average value thereof is defined as T¹. As shown in Figure 2, the average thickness of the portions at which the particulates do not form the projections on the surface of the primer layer T² meanwhile refers to the thickness of the regions at which the particulates do not form the projections, namely the thickness of the film surface.

### <Adhesive layer>

The adhesive layer in the present embodiment is a layer containing the adhesive.

The adhesive layer may be of any type. The adhesive layer preferably contains at least one of an acrylic adhesive, a silicone adhesive, and a urethane adhesive, and more preferably contains an acrylic adhesive and/or a urethane adhesive. The use of these adhesives enables achieving higher adhesiveness and adhesion to the primer layer.

The adhesive layer may be repeelable. Even though the repeelable adhesive layer is temporarily exfoliated from a material on which the adhesive film is pasted, the repeelable adhesive layer can be bonded thereto again.

The acrylic adhesive contains an acrylic polymer. Specific examples include FINETACK (CT-3088, CT-3850, CT-6030, CT-5020, and CT-5030) and QUICKMASTER (SPS-900-IV and QUICKMASTER SPS-1040NT-25), which are available from DIC Corporation, and the adhesive ORIBAIN, which are available from TOYOCHEM CO., LTD.

The silicone adhesive contains a silicone polymer. Specific examples include a polymer produced with KR-3704 (base compound) and CAT-PL-50T (platinum catalyst), which are available from Shin-Etsu Chemical Co., Ltd.

The urethane adhesive contains a urethane polymer. Specific examples include the adhesive ORIBAIN, which is available from TOYOCHEM CO., LTD., and DAIKALAC, which is available from Daido Chemical Corporation.

The acrylic polymer and the urethane polymer refer to compounds having number average molecular weights of 1000 or more, and preferably mean compounds having number average molecular weights of 2000 or more. The upper limits are, for example, 50000 or less. The number average molecular weights are values measured by GPC (gel permeation chromatography) in terms of polystyrene.

As the adhesive layer, an adhesive agent layer described in paragraphs 0026 to 00053 of Japanese Patent Laid-Open No. 2017-200975, an adhesive layer described in paragraphs 0056 to 0060 of Japanese Patent Laid-Open No. 2013-020130, an adhesive film in International Publication No. WO 2016/158827, an adhesive layer described in paragraphs 0031 to 0032 of Japanese Patent Laid-Open No. 2016-182791, and a rubber adhesive agent layer in paragraphs 0057 to 0084 of Japanese Patent Laid-Open No. 2015-147837 can also be adopted besides the above as long as the adhesive layers do not depart from the subject matter of the present invention. The contents thereof are incorporated herein.

The thickness of the adhesive layer is, but not particularly limited to, preferably 10 µm or more, more preferably 25 µm or more, and further preferably 35 µm or more, and may be 40 µm or more. The thickness of the adhesive layer is preferably 200 µm or less and more preferably 100 µm or less. If the thickness is in the above-mentioned range, more suitable adhesive properties and adhesive strength are achieved.

### <Haze of adhesive film>

The adhesive film of the present embodiment is preferably high in transparency. Specifically, the haze of the adhesive film measured in accordance with JIS K7136 is preferably 3% or less, more preferably 2% or less, further preferably 1.5% or less, still more preferably 1% or less, much more preferably 0.8% or less, and by far more preferably 0.6% or less. The lower limit of the haze is ideally 0%, but practically 0.01% or more.

The haze of the adhesive film measured in accordance with JIS K7136 is measured as described in Examples mentioned below.

### <Method for manufacturing adhesive film>

The adhesive film of the present embodiment comprises:
a primer layer formation step of applying a primer layer composition comprising an oligomer diol to the surface of a base material film comprising a polycarbonate to form a primer layer and
an adhesive layer formation step of applying an adhesive to the primer layer on the surface opposite to the base material film to form an adhesive layer. In the case of such a structure, an adhesive film with high formability is obtained.

It is more specifically preferable that, in the manufacturing of the adhesive film, the base material film be first formed. In the manufacturing of the base material film, a resin composition for forming the base material film containing the polycarbonate is processed into a sheet (a film) by a well-known method. In the present embodiment, it is preferable that especially a solvent-free resin composition for forming the base material film containing the polycarbonate be molten and extruded into the base material film. The base material film can be specifically formed by extrusion or cast molding. Examples of the extrusion include a method involving melting and kneading pellets, flakes, or powder of a resin composition using an extruder, then extruding the molten kneaded resin composition from a T-die, and cooling and solidifying the obtained semi-molten sheet while pressure-clamping the semi-molten sheet with rolls to form a sheet. A commercial polycarbonate film may be used.

If the base material film of the present embodiment has two or more layers, the base material film may be, for example, a multilayer film into which a composition containing a polycarbonate and a composition containing an acrylic resin are coextruded (base material film having a polycarbonate layer and an acrylic resin layer).

In the primer layer formation step, the primer layer composition containing the oligomer diol is preferably applied and cured to form the primer layer. The primer layer composition is the same as the primer layer composition described in the above-mentioned section of the primer layer of the adhesive film.

In the adhesive layer formation step, the adhesive is applied to the primer layer on the surface opposite to the base material film, and the applied adhesive is cured to form the adhesive layer. If primer layers are provided on both side of the base material film, adhesive layers may be naturally provided on the surfaces of the primer layers. In this case, the primer layers on both sides may be identical or different, and the adhesive layers on both sides may be identical or different.

As the technique for curing the primer layer composition and/or the adhesive, techniques such as photocuring and thermal curing can be adopted.

### <Thermoformed article and uses of adhesive film and thermoformed article>

A thermoformed article of the present embodiment is a thermoformed article of the adhesive film of the present embodiment.

The adhesive layer side of the adhesive film or the thermoformed article of the present embodiment is preferably adhered to at least part of the surface of another formed article. The other formed article is usually a resin molded article. The resin molded article is formed of resin, and means an adherend to be pasted together with the adhesive film or the thermoformed article of the present embodiment. In the present embodiment, the adhesive film may be pasted on the other formed article together, followed by thermoforming. The other formed article may be of any shape, may be a part or a finished article, and may have a smooth surface or may have an uneven shape or a still more complicated shape.

Three-dimensional forming processing, for example, by TOM formation (the adhesive film is formed directly on a transparent article), pressure forming, or thermoforming (the adhesive film is preliminarily formed and pasted on the other formed article together) is exemplified.

The adhesive film or the thermoformed article of the present embodiment is preferably used as, for example, a multilayered shatterproof film or a surface protective sheet on the front or the rear of a three-dimensional-shaped transparent article (glassware, a display, a touch panel, or VR glasses).

More specifically, the adhesive film of the present embodiment is suitably usable, for example, for display members of computers, televisions, and plasma displays and surface protective films for polarizing plates to be used for liquid crystal display devices.

### Examples

Hereinafter, the present invention will be described by giving Examples further specifically. As long as materials, the used amounts, the ratios, details of processing, and the procedures of the processing shown in the following Examples do not depart from the subject matter of the present invention, the above can be optionally modified. Accordingly, the scope of the present invention is not limited to the specific examples shown below.

If the procurement of measuring apparatuses and others used in Examples is difficult due to the discontinuance thereof, apparatuses having equivalent performance can be used for measurement.

If the amounts of components are expressed in merely "part", the "part" means "part by mass".

### 1. Raw material

### <Synthesis Example 1: Synthesis of urethane acrylate compound a>

(1) A three-necked flask with a capacity of 1 L provided with a stirrer, a thermal regulator, and a thermometer was charged with 42.06 g of trimethylhexamethylene diisocyanate and 0.10 g of dibutyltin dilaurate. The mixture was heated to an internal temperature of 80 to 90°C in an oil bath and stirred until complete dissolution.
(2) A dropping funnel with a bypass was charged with a solution in which 141.55 g of propylene glycol monomethyl ether acetate was uniformly dissolved in 200.0 g of a polyalkylene carbonate diol having a number average molecular weight of 2000 (DURANOL T5652 (Asahi Kasei Corp.), chain polycarbonate diol, carbonate diol containing a 1,5-pentanediol unit and a 1,6-hexanediol unit). The solution in this dropping funnel was dropped into the above-mentioned contents of (2) in a nitrogen atmosphere with stirring while the contents of the flask were maintained at a temperature of 80 to 90°C. The mixture was stirred at the same temperature for 2 hours.
(3) The contents of the flask were then cooled to a temperature of 60°C. Then, 30.83 g of 1-(2-hydroxyethyl)2-[2-[(1-oxo-2-propenyl)oxy]ethyl] 1,2-benzenedicarboxylate, 57.19 g of an adduct of 2-hydroxyethyl acrylate with 4 mol of ε-caprolactone, and 0.1 g of 4-methoxyphenol were uniformly mixed for dissolution to prepare a solution. The solution was rapidly added from a dropping funnel different from the dropping funnel of (2). The mixture was reacted for 4 hours with the contents of the flask maintained at a temperature of 80 to 90°C.
(4) After 4 hours, a small amount of the mixture was sampled. FT-IR confirmed that the absorbance of the isocyanate around 2300 cm⁻¹ disappeared to determine that the reaction was completed. Consequently, a 30% by mass dilution of a urethane acrylate compound in propylene glycol monomethyl ether acetate was obtained.

The number average molecular weight of an oligomer diol such as a polycarbonate diol is a value calculated based on the hydroxyl value measured in accordance with JIS K1577.

### <Synthesis Example 2: Synthesis of urethane acrylate compound b>

(1) A three-necked flask with a capacity of 1 L provided with a stirrer, a thermal regulator, and a thermometer was charged with 42.06 g of trimethylhexamethylene diisocyanate and 0.1 g of dibutyltin dilaurate. The mixture was heated to an internal temperature of 80 to 90°C in an oil bath and stirred until complete dissolution.
(2) A dropping funnel with a bypass was charged with a solution in which 152.84 g of propylene glycol monomethyl ether acetate was uniformly dissolved in 200.0 g of a polyalkylene carbonate diol having a number average molecular weight of 2000 (DURANOL T5652 (Asahi Kasei Corp.)). The solution in this dropping funnel was dropped into the above-mentioned contents of (2) in a nitrogen atmosphere with stirring while the contents of the flask were maintained at a temperature of 80 to 90°C. The mixture was stirred at the same temperature for 2 hours.
(3) The contents of the flask were then cooled to a temperature of 60°C. Then, 114.38 g of an adduct of 2-hydroxyethyl acrylate with 4 mol of ε-caprolactone and 0.1 g of 4-methoxyphenol were uniformly mixed for dissolution to prepare a solution. The solution was rapidly added from a dropping funnel different from the dropping funnel of (2). The mixture was reacted for 4 hours with the contents of the flask maintained at a temperature of 80 to 90°C.
(4) After 4 hours, a small amount of the mixture was sampled. FT-IR confirmed that the absorbance of the isocyanate around 2300 cm⁻¹ disappeared to determine that the reaction was completed. Consequently, a 30% by mass dilution of a urethane acrylate compound in propylene glycol monomethyl ether acetate was obtained.

### <Synthesis Example 3: Synthesis of urethane acrylate compound c>

(1) A three-necked flask with a capacity of 1 L provided with a stirrer, a thermal regulator, and a thermometer was charged with 42.06 g of trimethylhexamethylene diisocyanate and 0.10 g of dibutyltin dilaurate. The mixture was heated to an internal temperature of 80 to 90°C in an oil bath and stirred until complete dissolution.
(2) A dropping funnel with a bypass was charged with a solution in which 130.25 g of propylene glycol monomethyl ether acetate was uniformly dissolved in 200.00 g of a polyalkylene carbonate diol having a number average molecular weight of 2000 (DURANOL T5652 (Asahi Kasei Corp.)). The solution in this dropping funnel was dropped into the above-mentioned contents of (2) in a nitrogen atmosphere with stirring while the contents of the flask were maintained at a temperature of 80 to 90°C. The mixture was stirred at the same temperature for 2 hours.
(3) The contents of the flask were then cooled to a temperature of 60°C. Then, 61.66 g of 1-(2-hydroxyethyl)2-[2-[(1-oxo-2-propenyl)oxy]ethyl] 1,2-benzenedicarboxylate and 0.1 g of 4-methoxyphenol were uniformly mixed for dissolution to prepare a solution. The solution was rapidly added from a dropping funnel different from the dropping funnel of (2). The mixture was reacted for 4 hours with the contents of the flask maintained at a temperature of 80 to 90°C.
(4) After 4 hours, a small amount of the mixture was sampled. FT-IR confirmed that the absorbance of the isocyanate around 2300 cm⁻¹ disappeared to determine that the reaction was completed. Consequently, a 30% by mass dilution of a urethane acrylate compound in propylene glycol monomethyl ether acetate was obtained.

### <Synthesis Example 4: Synthesis of urethane acrylate compound d>

(1) A three-necked flask with a capacity of 1 L provided with a stirrer, a thermal regulator, and a thermometer was charged with 52.48 g of methylene bis(cyclohexane-4,1-diyl) bisisocyanate and 0.1 g of dibutyltin dilaurate. The mixture was heated to an internal temperature of 80 to 90°C in an oil bath and stirred until complete dissolution.
(2) A dropping funnel with a bypass was charged with a solution in which 146.00 g of propylene glycol monomethyl ether acetate was uniformly dissolved in 200.0 g of polytetramethylene glycol having a number average molecular weight of 2000 (PTG-2000 (Hodogaya Chemical Co., Ltd.)). The solution in this dropping funnel was dropped into the above-mentioned contents of (2) in a nitrogen atmosphere with stirring while the contents of the flask were maintained at a temperature of 80 to 90°C. The mixture was stirred at the same temperature for 2 hours.
(3) The contents of the flask were then cooled to a temperature of 60°C. Then, 30.83 g of 1-(2-hydroxyethyl)2-[2-[(1-oxo-2-propenyl)oxy]ethyl] 1,2-benzenedicarboxylate, 57.19 g of an adduct of 2-hydroxyethyl acrylate with 4 mol of ε-caprolactone, and 0.1 g of 4-methoxyphenol were uniformly mixed for dissolution to prepare a solution. The solution was rapidly added from a dropping funnel different from the dropping funnel of (2). The mixture was reacted for 4 hours with the contents of the flask maintained at a temperature of 80 to 90°C.
(4) After 4 hours, a small amount of the mixture was sampled. FT-IR confirmed that the absorbance of the isocyanate around 2300 cm⁻¹ disappeared to determine that the reaction was completed. Consequently, a 30% by mass dilution of a urethane acrylate compound in propylene glycol monomethyl ether acetate was obtained.

### <Synthesis Example 5: Synthesis of comparative urethane acrylate compound e>

A 3 L three-necked flask was charged with 987 parts of - acryloyloxyethyl-2-hydroxyethylphthalic acid, 1102 parts of unsaturated fatty acid hydroxyalkyl ester-modified ε-caprolactone, 1.4 parts of dibutyltin dilaurate, and 1.4 parts of 2,6-tert-butyl-4-methylphenol. The mixture was uniformly mixed. While the temperature was controlled at 60°C, 771 parts of isophorone diisocyanate was fed. After the feeding, the air was replaced with nitrogen, and the mixture was then stirred at 70°C for 15 hours to complete the reaction.

### <Synthesis Example 6: Synthesis of comparative urethane acrylate compound f>

A 3 L three-necked flask was charged with 1625 parts of hydroxypropyl acrylate, 0.7 parts of dibutyltin dilaurate, and 1.4 parts of 2,6-tert-butyl-4-methylphenol. The mixture was uniformly mixed. While the temperature was controlled at 60°C, 1175 parts of xylene diisocyanate was fed. After the feeding, the air was replaced with nitrogen, and the mixture was then stirred at 70°C for 15 hours to complete the reaction.

### <Synthesis Example 7: Synthesis of urethane acrylate compound g>

(1) A three-necked flask with a capacity of 1 L provided with a stirrer, a thermal regulator, and a thermometer was charged with 42.06 g of trimethylhexamethylene diisocyanate and 0.07 g of dibutyltin dilaurate. The mixture was heated to an internal temperature of 80 to 90°C in an oil bath and stirred until complete dissolution.
(2) A dropping funnel with a bypass was charged with a solution in which 98.66 g of propylene glycol monomethyl ether acetate was uniformly dissolved in 100.0 g of a polycarbonate diol having a number average molecular weight of 900 (ETERNACOLL UM-90 (3/1) (UBE Corporation), polycarbonate diol containing alicyclic structure, carbonate diol containing a cyclohexanedimethanol unit and a 1,6-hexanediol unit). The solution in this dropping funnel was dropped into the above-mentioned contents of (2) in a nitrogen atmosphere with stirring while the contents of the flask were maintained at a temperature of 80 to 90°C. The mixture was stirred at the same temperature for 2 hours.
(3) The contents of the flask were then cooled to a temperature of 60°C. Then, 30.83 g of 1-(2-hydroxyethyl)2-[2-[(1-oxo-2-propenyl)oxy]ethyl] 1,2-benzenedicarboxylate, 57.19 g of an adduct of 2-hydroxyethyl acrylate with 4 mol of ε-caprolactone, and 0.07 g of 4-methoxyphenol were uniformly mixed for dissolution to prepare a solution. The solution was rapidly added from a dropping funnel different from the dropping funnel of (2). The mixture was reacted for 4 hours with the contents of the flask maintained at a temperature of 80 to 90°C.
(4) After 4 hours, a small amount of the mixture was sampled. FT-IR confirmed that the absorbance of the isocyanate around 2300 cm⁻¹ disappeared to determine that the reaction was completed. Consequently, a 30% by mass dilution of a urethane acrylate compound in propylene glycol monomethyl ether acetate was obtained.

### <Preparation of primer layer composition A-1>

To the urethane acrylate compound a, obtained in the above-mentioned Synthesis Example 1, was added the photopolymerization initiator Omnirad 184D (available from IGM Resins B.V.) at 5% by mass, and the solid content was adjusted to 30% by mass with the solvent propylene glycol monomethyl ether.

### <Preparation of primer layer composition A-2>

To the urethane acrylate compound a, obtained in the above-mentioned Synthesis Example 1, was added the photopolymerization initiator Omnirad 184D (available from IGM Resins B.V.) at 5% by mass, and the solid content was adjusted to 30% by mass with the solvent propylene glycol monomethyl ether. Silica (average particle size: 2.5 µm, SEAHOSTAR KE-P250, which was available from NIPPON SHOKUBAI CO., LTD.) was further added at 0.5% by mass based on 100% by mass solid matter for adjustment.

### <Preparation of primer layer composition B-1>

To the urethane acrylate compound b, obtained in the above-mentioned Synthesis Example 2, was added the photopolymerization initiator Omnirad 184D (available from IGM Resins B.V.) at 5% by mass, and the solid content was adjusted to 30% by mass with the solvent propylene glycol monomethyl ether.

### <Preparation of primer layer composition B-2>

To the urethane acrylate compound b, obtained in the above-mentioned Synthesis Example 2, was added the photopolymerization initiator Omnirad 184D (available from IGM Resins B.V.) at 5% by mass, and the solid content was adjusted to 30% by mass with the solvent propylene glycol monomethyl ether. Silica (average particle size: 2.5 µm, SEAHOSTAR KE-P250, which was available from NIPPON SHOKUBAI CO., LTD.) was further added at 0.5% by mass based on 100% by mass solid matter for adjustment.

### <Preparation of primer layer composition C-1>

To the urethane acrylate compound c, obtained in the above-mentioned Synthesis Example 3, was added the photopolymerization initiator Omnirad 184D (available from IGM Resins B.V.) at 5% by mass, and the solid content was adjusted to 30% by mass with the solvent propylene glycol monomethyl ether.

### <Preparation of primer layer composition C-2>

To the urethane acrylate compound c, obtained in the above-mentioned Synthesis Example 3, was added the photopolymerization initiator Omnirad 184D (available from IGM Resins B.V.) at 5% by mass, and the solid content was adjusted to 30% by mass with the solvent propylene glycol monomethyl ether. Silica (average particle size: 2.5 µm, SEAHOSTAR KE-P250, which was available from NIPPON SHOKUBAI CO., LTD.) was further added at 0.5% by mass based on 100% by mass solid matter for adjustment.

### <Preparation of primer layer composition D-1>

To the urethane acrylate compound d, obtained in the above-mentioned Synthesis Example 4, was added the photopolymerization initiator Omnirad 184D (available from IGM Resins B.V.) at 5% by mass, and the solid content was adjusted to 30% by mass with the solvent propylene glycol monomethyl ether.

### <Preparation of primer layer composition D-2>

To the urethane acrylate compound d, obtained in the above-mentioned Synthesis Example 4, was added the photopolymerization initiator Omnirad 184D (available from IGM Resins B.V.) at 5% by mass, and the solid content was adjusted to 30% by mass with the solvent propylene glycol monomethyl ether. Silica (average particle size: 2.5 µm, SEAHOSTAR KE-P250, which was available from NIPPON SHOKUBAI CO., LTD.) was further added at 0.5% by mass based on 100% by mass solid matter for adjustment.

### <Preparation of primer layer composition E-1>

The comparative urethane acrylate compound e, obtained in the above-mentioned Synthesis Example 5, and the comparative urethane acrylate compound f, obtained in the above-mentioned Synthesis Example 6, were mixed at 50/50 (mass ratio). The photopolymerization initiator Omnirad 184D (available from IGM Resins B.V.) was added at 5% by mass, and the solid content was adjusted to 30% by mass with the solvent propylene glycol monomethyl ether.

### <Preparation of primer layer composition E-2>

The comparative urethane acrylate compound e, obtained in the above-mentioned Synthesis Example 5, and the comparative urethane acrylate compound f, obtained in the above-mentioned Synthesis Example 6, were mixed at 50/50 (mass ratio). The photopolymerization initiator Omnirad 184D (available from IGM Resins B.V.) was added at 5% by mass, and the solid content was adjusted to 30% by mass with the solvent propylene glycol monomethyl ether. Silica (average particle size: 2.5 µm, SEAHOSTAR KE-P250, which was available from NIPPON SHOKUBAI CO., LTD.) was further added at 0.5% by mass based on 100% by mass solid matter for adjustment.

### <Preparation of primer layer composition F>

A hexafunctional urethane acrylate (trade name: UN-3320HC, which was available from Negami Chemical Industrial Co., Ltd.) and a difunctional acrylate (2-(2-vinyloxyethoxy)ethyl acrylate, trade name: VEEA, which was available from NIPPON SHOKUBAI CO., LTD.) were mixed at 90/10 (mass ratio). The photopolymerization initiator Omnirad 184D (available from IGM Resins B.V.) was added at 5% by mass, and the solid content was adjusted to 30% by mass with the solvent propylene glycol monomethyl ether.

### <Preparation of primer layer composition G-1>

To the urethane acrylate compound g, obtained in the above-mentioned Synthesis Example 7, was added the photopolymerization initiator Omnirad 184D (available from IGM Resins B.V.) at 5% by mass, and the solid content was adjusted to 30% by mass with the solvent propylene glycol monomethyl ether.

### <Preparation of primer layer composition G-2>

To the urethane acrylate compound g, obtained in the above-mentioned Synthesis Example 7, was added the photopolymerization initiator Omnirad 184D (available from IGM Resins B.V.) at 5% by mass, and the solid content was adjusted to 30% by mass with the solvent propylene glycol monomethyl ether. Silica (average particle size: 2.5 µm, SEAHOSTAR KE-P250, which was available from NIPPON SHOKUBAI CO., LTD.) was further added at 0.5% by mass based on 100% by mass solid matter for adjustment.

### <Adhesive>

Adhesive a: To 100 parts of the urethane adhesive DAIKALAC 5024 (available from Daido Chemical Corporation) were added 0.1 parts of Coronate HX (available from Tosoh Corporation) as a curing agent and 50 parts of toluene as a solvent.

Adhesive b: To 100 parts of the urethane adhesive DAIKALAC 5021 (available from Daido Chemical Corporation) were added 0.1 parts of Coronate HX (available from Tosoh Corporation) as a curing agent and 50 parts of toluene as a solvent.

### 2. Examples 1 to 20 and Comparative Examples 1 to 6

### <Manufacturing of primer multilayer films>

Polycarbonate films (FS-2000H, which was available from MGC Filsheet Co., Ltd., glass transition temperature: 130°C, thickness: 300 µm) were coated with primer layer compositions of types shown in Table 1 or 2 to a dry film thickness of 1 µm with a barcoater. The coated polycarbonate films were dried with a hot-air circulating dryer at 100°C for 1 minute. The compositions were irradiated and cured with ultraviolet rays using an ultraviolet ray irradiator (accumulated light amount: 300 mJ/cm²) to obtain primer multilayer films (polycarbonate film/ primer layer).

Each of the films was measured for thicknesses at 10 random points, and the average value thereof was defined as the dry film thickness (the thicknesses mentioned below were measured and defined in the same way). If a primer layer composition contains silica (particulates), the primer layer composition was applied so that the average thickness of portions at which silica (particulates) formed projections on the surface of the primer layer T¹ (the average thickness of five random points of the portions forming the projections) was 2.6 µm, and the average thickness of portions at which silica (particulates) did not form the projections on the surface of the primer layer T² (the average thickness of five random points of the portions not forming the projections) was 1.1 µm.

The glass transition temperature was a value measured in accordance with the following.

### <<Measurement of glass transition temperature (Tg)>>

Around 10 mg of a specimen was subjected to two cycles of heating and cooling in accordance with the following measurement conditions for DSC (differential scanning calorie), and the glass transition temperature during the heating in the second cycle was measured. The temperature at the intersection point of the straight line obtained by extending the baseline in the lower temperature region to the higher temperature region with the tangent line at the inflection point was defined as the initial glass transition temperature. The temperature at the intersection point of the straight line obtained by extending the baseline in the higher temperature region to the lower temperature region with the tangent line at the inflection point was defined as the end glass transition temperature. The midpoint between the initial glass transition temperature and the end glass transition temperature was defined as the glass transition temperature (Tg, unit: °C) in the present invention.
Measurement start temperature: 30°C
Rate of temperature increase: 10°C/minute
Reached temperature: 250°C
Rate of temperature decrease: 20°C/minute

As the measuring apparatus, a differential scanning calorimeter (DSC, available from Hitachi High-Tech Science Corporation, "DSC7020") was used.

### <Manufacturing of adhesive films>

An adhesive shown in Table 1 or 2 was applied to a mold release PET film (article number: CR-A, which is available from Chiyoda Gravure Corporation) to a dry coating film thickness of 75 µm. The adhesive was cured at 80°C for 1 minute and at 110°C for 1 minute.

The obtained mold release PET film with the adhesive was pressure-bonded to the primer multilayer film obtained above with a roll laminator so that the adhesive side of the mold release PET film with the adhesive was in contact with the surface of the primer layer of the primer multilayer film. The obtained multilayer film was then cured at room temperature for one week to obtain an adhesive film (polycarbonate/ primer layer/ adhesive layer/ mold release PET film).

### <Manufacturing of primer multilayer films with acrylic resin layers>

A multilayered test piece in which the polycarbonate film was layered on the acrylic resin layer (polymethyl methacrylate) was manufactured in accordance with the following method.

A multilayered article was formed with a multilayer extruding apparatus comprising a monoaxial extruder having a shaft diameter of 32 mm, a monoaxial extruder having a shaft diameter of 65 mm, a feed block connected to a full extruder, and a T-die with a width of 650 mm connected to the feed block. DELPET 80HD (polymethyl methacrylate resin, available from Asahi Kasei Corp.), which was an acrylic resin, was melt-extruded from the monoaxial extruder having a shaft diameter of 32 mm (at a cylinder temperature of 250°C). E-2000N (bisphenol-A polycarbonate resin, available from Mitsubishi Engineering-Plastics Corporation), which was a polycarbonate resin, was melt-extruded from the monoaxial extruder having a shaft diameter of 65 mm (at a cylinder temperature of 280°C). The melt-extruded resins were passed through the feed block comprising a split pin for two types of two layers connected to the extruders and extruded through the T-die into a sheet shape. The extruded sheet was cooled while a mirror surface was transferred with three mirror finish rolls at 130°C, 140°C, and 180°C from the upstream side and taken up with a winder to manufacture the multilayer film. The discharge amounts of the extruders and the take-up speed of the film were adjusted to obtain the multilayer film of acrylic resin/ polycarbonate resin with a total thickness of 300 µm comprising an acrylic resin layer with a thickness of 60 µm and a polycarbonate resin layer with a thickness of 240 µm.

Each primer layer composition was applied to the surface on the polycarbonate film side of the obtained test piece to a thickness of 1 µm, dried at 100°C for 1 minute, and cured at an accumulated light amount of 300 mJ/cm² with an ultraviolet ray irradiator to obtain a primer multilayer film with the acrylic resin layer (acrylic resin layer/ polycarbonate film/ primer layer).

The obtained primer multilayer films, adhesive films, and primer multilayer film with the acrylic resin layers were evaluated as follows.

### <Adhesions of primer multilayer films>

The adhesion between the polycarbonate film and the primer layer of each primer multilayer film was evaluated by the cross-cut method in accordance with JIS K5600-5-6. The cut intervals were 2 mm and evaluation was performed by the following determination.
Good: No exfoliation is observed on any grid.
Poor: Partial or the entire exfoliation is observed on grids.

Five specialists determined whether the primer multilayer film was good or poor, and decided the evaluation by majority vote.

### <Haze of primer multilayer films>

The primer multilayer films were measured for haze in accordance with JIS K7136.

The haze (unit: %) was specifically measured with a haze meter under the conditions of a D65 light source and a 10° visual field.

As the haze meter, a "HM-150", which was available from MURAKAMI COLOR RESEARCH LABORATORY, was used.

### <Formability 1 (Formability of primer multilayer films)>

Each primer multilayer film obtained above was cut to a size of 210 mm × 297 mm × 0.3 mm (thickness). The cut primer multilayer film was preheated at 190°C for 40 seconds and disposed so that the surface of the polycarbonate film side of the primer multilayer film was in contact with a metal mold including a right angle-shaped protrusion with a deep drawing height of 11 mm and a size of a length of 30 mm and a width of 30 mm. The primer multilayer film was pressure-formed with air under a high pressure of 3.5 MPa.

Determination was performed as follows based on whether the diameter R in a region in which the obtained pressure-formed article was in contact with the right angle-shaped portion of the metal mold was 3 mm or less and whether any crack is present on the primer layer on the pressure-formed article. If the diameter R in a region in which the obtained pressure-formed article was in contact with the right angle-shaped portion of the metal mold was more than 3 mm and/or if the primer layer cracked, the primer multilayer film was pressure-formed with a metal mold including a right angle-shaped protrusion with a deep drawing height of 7 mm and a size of a length of 30 mm and a width of 30 mm in the same way.

Five specialists determined by majority vote.
A: The diameter R in a region in which the obtained pressure-formed article was in contact with the right angle-shaped portion of the metal mold was 3 mm or less, the primer layer did not crack, and the primer multilayer film was therefore good.
B: Although the primer multilayer film did not satisfy A, in the case of the formation with a metal mold having a deep drawing height of 7 mm, the diameter R in a region in which the obtained pressure-formed article was in contact with the right angle-shaped portion of the metal mold was 3 mm or less, the primer layer did not crack, and the primer multilayer film was therefore good.
C: The primer multilayer film satisfied neither the above-mentioned A nor B (for example, even though either metal mold was used, or the primer layer cracked).

### <Formability 2 (Formability of primer multilayer film with acrylic resin layer)>

Each primer multilayer film with the acrylic resin layer obtained above was cut to a size of 210 mm × 297 mm × 0.3 mm (thickness). The cut primer multilayer film with the acrylic resin layer was preheated at 190°C for 40 seconds and disposed so that the surface of the acrylic resin layer side of the primer multilayer film with the acrylic resin layer was in contact with a metal mold including a right angle-shaped protrusion with a deep drawing height of 11 mm and a size of a length of 30 mm and a width of 30 mm. The primer multilayer film with the acrylic resin layer was pressure-formed with air under a high pressure of 3.5 MPa.

The determination was performed as follows based on whether the diameter R in a region in which the obtained pressure-formed article was in contact with the right angle-shaped portion of the metal mold was 3 mm or less and whether any crack is present on the primer layer on the pressure-formed article. If the diameter R in a region in which the obtained pressure-formed article was in contact with the right angle-shaped portion of the metal mold was more than 3 mm and/or for the cracked primer multilayer film, the primer multilayer film was pressure-formed with a metal mold including a right angle-shaped protrusion with a deep drawing height of 7 mm and a size of a length of 30 mm and a width of 30 mm in the same way.

Five specialists observed the pressure-formed article through an optical microscope for determination, and determined by majority vote.
A: The diameter R in a region in which the obtained pressure-formed article was in contact with the right angle-shaped portion of the metal mold was 3 mm or less, the primer layer did not crack, and the primer multilayer film was therefore good.
B: Although the primer multilayer film did not satisfy A, in the case of the formation with a metal mold having a deep drawing height of 7 mm, the diameter R in a region in which the obtained pressure-formed article was in contact with the right angle-shaped portion of the metal mold was 3 mm or less, the primer layer did not crack, and the primer multilayer film was therefore good.
C: The primer multilayer film satisfied neither the above-mentioned A nor B (for example, even though either metal mold was used, or the primer layer cracked).

### <Haze of adhesive films>

The mold release PET film was peeled from each obtained adhesive film (the adhesive layer was present on the adhesive film side). The haze was measured in accordance with JIS K7136.

The haze (unit: %) was specifically measured with a haze meter under the conditions of a D65 light source and a 10° visual field.

As the haze meter, a "HM-150", which was available from MURAKAMI COLOR RESEARCH LABORATORY, was used.

### <Adhesive strength of adhesive films>

Each obtained adhesive film was cut to a size of a length of 25 mm and a width of 100 mm. The mold release PET film was peeled therefrom to expose the adhesive layer. The adhesive film was bonded to a glass plate so that the exposed adhesive layer (measurement surface) was in contact with the glass plate. A 2-kg rubber roller (width: around 50 mm) was reciprocated thereon once to manufacture a sample for measuring the peel strength. After the sample for measuring the peel strength was left to stand in an environment at 25°C and a humidity of 50% RH for 24 hours, the sample was subjected to a tensile test in accordance with JIS Z0237 with a peel tester (available from Kyowa Interface Science Co., Ltd.) at a peel rate of 300 mm/min in a 180° direction and measured for peel force (N/25 mm) between the glass plate and the adhesive film.

As a heat resistance test, each adhesive film was pasted on glass. The pasted adhesive film was left to stand at 180°C for 5 minutes, taken out at room temperature, and subjected to a tensile test in the 180° direction 2 hours after to measure the peel force (N/25 mm) between the glass plate and the adhesive film. As the difference between the initial peel force and the peel force after the heat resistance test decreases, the adhesive film becomes better.

As the moist heat resistance test, the obtained adhesive film was pasted on glass, left to stand at 85°C and 85% RH for 100 hours, taken out at room temperature, and subjected to a tensile test in the 180° direction 2 hours after to measure the peel force (N/25 mm) between the glass plate and the adhesive film. As the difference between the initial peel force and the peel force after the moist heat resistance test decreases, the adhesive film becomes better.

### <Appearance of adhesive films>

The appearances of the adhesive films after the above-mentioned heat resistance test and after the above-mentioned moist heat resistance test were observed and evaluated in accordance with the following criteria. Five specialists evaluated by majority vote.
Transfer: The adhesive was transferred from the adhesive film to the adherent completely during the measurement.
Cohesive failure: Exfoliation occurred in the adhesive layer (No adhesive film was applicable).
Good: Neither of the above occurred. For example, neither transfer nor cohesive failure occurred.

**[Table 1]**

| | Primer layer composition | Type of adhesive | Evaluation of primer multilayer film | | | | Evaluation of adhesive film | | | | | |
|---|---|---|---|---|---|---|---|---|---|---|---|---|
| | | | Adhesion | Optical characteristic | Formability | | Optical characteristic | Initial state | Heat resistance | | Moist heat resistance | |
| | | | | Haze (%) | Formability 1 | Formability 2 (film with acrylic resin layer) | Haze (%) | Adhesive strength (N/25 mm) | Appearance | Adhesive strength (N/25 mm) | Appearance | Adhesive strength (N/25 mm) |
| Example 1 | A-1 | a | Good | 0.2 | A | A | 0.2 | 31.2 | Good | 31.9 | Good | 36.4 |
| Example 2 | A-2 | a | Good | 0.8 | A | A | 0.4 | 31.5 | Good | 32.3 | Good | 42.3 |
| Example 3 | B-1 | a | Good | 0.2 | A | A | 0.2 | 32.8 | Good | 330 | Good | 30.5 |
| Example 4 | B-2 | a | Good | 0.8 | A | A | 0.4 | 33.0 | Good | 330 | Good | 42.3 |
| Example 5 | C-1 | a | Good | 0.2 | A | A | 0.2 | 31.7 | Good | 330 | Good | 33.2 |
| Example 6 | C-2 | a | Good | 0.8 | A | A | 0.4 | 32.6 | Good | 342 | Good | 46.9 |
| Example 7 | 0-1 | a | Good | 0.2 | A | A | 0.2 | 28.5 | Transfer | 32.0 | Good | 28.3 |
| Example 8 | 0-2 | a | Good | 0.8 | A | A | 0.4 | 32.0 | Transfer | 296 | Good | 20.7 |
| Com parative Example 1 | E-1 | a | Good | 0.2 | C | C | 0.2 | 30.0 | Good | 35.3 | Good | 41.9 |
| Com parative Example 2 | E-2 | a | Good | 0.4 | C | C | 0.4 | 31.2 | Good | 35.6 | Good | 41.5 |
| Com parative Example 3 | F | a | Good | 0.2 | C | C | 0.2 | 31.5 | Good | 31.2 | Good | 30.5 |
| Example 9 | G-1 | a | Good | 0.2 | B | B | 0.4 | 33.5 | Good | 36.2 | Good | 36.0 |
| Example 10 | G-2 | a | Good | 0.8 | B | B | 0.2 | 31.6 | Good | 35.4 | Good | 35.8 |

**[table 2]**

| | Primer layer composition | Type of adhesive | Evaluation of primer multilayer film | | | | Evaluation of adhesive film | | | | | |
|---|---|---|---|---|---|---|---|---|---|---|---|---|
| | | | Adhesion | Optical characteristic | Formability | | Optical characteristic | Initial state | Heat resistance | | Moist heat resistance | |
| | | | | Haze (%) | Formability 1 | Formability 2 (film with acrylic resin layer) | Haze (%) | Adhesive strength (N/25 mm) | Appearance | Adhesive strength (N/25 mm) | Appearance | Adhesive strength (N/25 mm) |
| Example 11 | A-1 | b | Good | 0.2 | A | A | 0.2 | 30.1 | Good | 32.6 | Good | 31.2 |
| Example 12 | A-2 | b | Good | 0.8 | A | A | 0.4 | 30.2 | Good | 32.5 | Good | 31.5 |
| Example 13 | B-1 | b | Good | 0.2 | A | A | 0.2 | 32.5 | Good | 33.3 | Good | 33.1 |
| Example 14 | B-2 | b | Good | 0.8 | A | A | 0.4 | 33.1 | Good | 33.1 | Good | 33.6 |
| Example 15 | C-1 | b | Good | 0.2 | A | A | 0.2 | 31.6 | Good | 33.5 | Good | 33.4 |
| Example 16 | C-2 | b | Good | 0.8 | A | A | 0.4 | 32.1 | Good | 33.6 | Good | 33.2 |
| Example 17 | D-1 | b | Good | 0.2 | A | A | 0.2 | 30.5 | Transfer | 31.2 | Transfer | 30.6 |
| Example 18 | D-2 | b | Good | 0.8 | A | A | 0.4 | 32.1 | Transfer | 38.6 | Transfer | 31.1 |
| Com parative Example 4 | E-1 | b | Good | 0.2 | C | C | 0.2 | 31.3 | Transfer | - | Good | 0.8 |
| Com parative Example 5 | E-2 | b | Good | 0.4 | C | C | 0.4 | 31.5 | Transfer | - | Good | 0.4 |
| Com parative Example 6 | F | b | Good | 0.2 | C | C | 0.2 | 32.1 | Good | 32.5 | Good | 32.2 |
| Example 19 | G-1 | b | Good | 0.2 | B | B | 0.2 | 33.1 | Good | 35.1 | Good | 33.4 |
| Example 20 | G-2 | b | Good | 0.8 | B | B | 0.4 | 33.7 | Good | 36.2 | Good | 33.1 |

### Reference Signs List

- 1: base material film
- 2: primer layer
- 3: adhesive layer
- 4: particulate

## Claims

1. An adhesive film, comprising;
a base material film comprising a polycarbonate;
a primer layer provided on at least one surface of the base material film; and
an adhesive layer provided on the primer layer on a surface opposite to the base material film,
wherein the primer layer is formed of a primer layer composition comprising an oligomer diol.

2. The adhesive film according to claim 1, wherein the oligomer diol comprises a polycarbonate diol.

3. The adhesive film according to claim 1 or 2, wherein the primer layer comprises a polyfunctional urethane (meth)acrylate.

4. The adhesive film according to any one of claims 1 to 3, wherein the primer layer comprises particulates having an average particle size of 0.1 to 10 µm.

5. The adhesive film according to claim 4, wherein a content of the particulates is 0.1 to 5 parts by mass based on 100 parts by mass of the primer layer.

6. The adhesive film according to claim 4 or 5, wherein, in the primer layer, a ratio of an average thickness of portions at which the particulates do not form projections on a surface of the primer layer, T², to an average thickness of portions at which the particulates form the projections on the surface of the primer layer, T¹, (T²/T¹) is 0.3 to 0.8.

7. The adhesive film according to any one of claims 1 to 6, wherein the oligomer diol has a number average molecular weight (Mn) of 500 to 5,000.

8. The adhesive film according to any one of claims 1 to 7, wherein the oligomer diol comprises a chain polycarbonate diol.

9. The adhesive film according to claim 8, wherein the chain polycarbonate diol comprises a chain diol unit having 3 to 10 carbon atoms.

10. The adhesive film according to claim 8, wherein the chain polycarbonate diol comprises a 1,5-pentanediol unit and/or a 1,6-hexanediol unit.

11. The adhesive film according to any one of claims 1 to 10, wherein the adhesive layer comprises an acrylic adhesive and/or a urethane adhesive.

12. The adhesive film according to any one of claims 1 to 11, wherein the primer layer has a thickness of 0.1 to 5 µm.

13. The adhesive film according to any one of claims 1 to 12, wherein haze of the adhesive film measured in accordance with JIS K7136 is 3% or less.

14. The adhesive film according to any one of claims 1 to 13, wherein the base material film has a polycarbonate layer and an acrylic resin layer.

15. The adhesive film according to any one of claims 1 to 14, wherein the base material film comprises the polycarbonate having a glass transition temperature of 100 to 140°C, the glass transition temperature being measured in accordance with differential scanning calorimetry.

16. The adhesive film according to any one of claims 1 to 15, wherein the base material film has a thickness of 30 to 1000 µm.

17. The adhesive film according to claim 1,
wherein the oligomer diol comprises a polycarbonate diol,
the primer layer comprises a polyfunctional urethane (meth)acrylate,
the oligomer diol has a number average molecular weight (Mn) of 500 to 5,000,
the oligomer diol comprises a chain polycarbonate diol,
the chain polycarbonate diol comprises a 1,5-pentanediol unit and/or a 1,6-hexanediol unit,
the adhesive layer comprises an acrylic adhesive and/or a urethane adhesive, and
the base material film comprises the polycarbonate having a glass transition temperature of 100 to 140°C, the glass transition temperature being measured in accordance with differential scanning calorimetry.

18. A thermoformed article of an adhesive film according to any one of claims 1 to 17.

19. A method for manufacturing an adhesive film according to any one of claims 1 to 17, comprising;
a primer layer formation step of applying a primer layer composition comprising an oligomer diol to a surface of a base material film comprising a polycarbonate to form a primer layer and
an adhesive layer formation step of applying an adhesive to the primer layer on the surface opposite to the base material film to form an adhesive layer.
